(19) Europäisches Patentamt / European Patent Office / Office européen des brevets

(11) **EP 2 418 782 B1**

(12) **EUROPEAN PATENT SPECIFICATION**

(45) Date of publication and mention
of the grant of the patent:
**08.05.2013 Bulletin 2013/19**

(51) Int Cl.:
***H04B 7/06*** (2006.01)

(21) Application number: **10803923.1**

(22) Date of filing: **30.07.2010**

(86) International application number:
**PCT/CN2010/075597**

(87) International publication number:
**WO 2011/012090 (03.02.2011 Gazette 2011/05)**

(54) **METHOD, BASE STATION AND MOBILE TERMINAL DEVICE FOR COMMUNICATION**

VERFAHREN, BASISSTATION UND ENDGERÄT FÜR KOMMUNIKATION

PROCÉDÉ, STATION DE BASE ET DISPOSITIF MOBILE TERMINAL POUR COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.07.2009 CN 200910157477**

(43) Date of publication of application:
**15.02.2012 Bulletin 2012/07**

(73) Proprietor: **Huawei Technologies Co. Ltd.
Shenzhen, Guangdong 518129 (CN)**

(72) Inventors:
• **ZHANG, Gong**
**518129, Shenzhen (CN)**

• **LONG, Yi**
**518129, Shenzhen (CN)**
• **FENG, Dayang**
**518129, Shenzhen (CN)**
• **CHENG, Yong**
**518129, Shenzhen (CN)**
• **LIU, Jianneng**
**518129, Shenzhen (CN)**

(74) Representative: **Kreuz, Georg Maria
Huawei Technologies Duesseldorf GmbH
Dessauerstrasse 3
80992 München (DE)**

(56) References cited:
**WO-A1-2009/048204    WO-A2-2009/082179
CN-A- 101 330 357    CN-A- 101 340 219**

**Description**

**FIELD OF THE INVENTION**

The present invention relates to the field of wireless communication technologies, and in particular, to a method, a system, a Base Station (BS) and a mobile terminal device for communication.

**BACKGROUND OF THE INVENTION**

A mobile communication system supports users having different motion manners, such as static, low-speed, and high-speed users. As for low-speed users (corresponding to closed-loop users), Channel State Information (CSI) changes slowly, and therefore, on a BS side, the closed-loop users can obtain high-quality services through CSI fed back by the terminal to perform pre-coding. As for high-speed users (corresponding to open-loop users), due to Doppler Shift and fast CSI change, the BS is difficult to obtain real-time CSI, so on the BS side, the open-loop users cannot obtain high-quality services through CSI fed back by the terminal.
As for the open-loop users, the current collaborative communication at least has the following problems: 1. The number of antennas of collaborative BS is far more than the number of antennas of served open-loop users, and at a moment, the BS only serves a single open-loop user, so that the system efficiency is low. 2. The BS is difficult to obtain instant CSI of an open-loop user, so that a utilization rate of a frequency spectrum is low. 3. Because an open-loop Space-Division-Multiple-Access (SDMA) technique cannot pre-process interference between the users, a transmission structure is designed, so that a receiving end processes the interference between the users, which inevitably depends on a configuration of system antennas, and cannot adapt to the change of receiving antennas.
WO 2009/082179 A2 provides a method for transmitting information necessary for performing collaborative multi input multi output (MIMO) operation between a mobile station and a base station in order to improve reception performance of the mobile station in a multi-cell environment is provided. The mobile station may receive a feedback channel for the collaborative MIMO indicator including information indicating that the collaborative MIMO is started to the serving base station.

**SUMMARY OF THE INVENTION**

The present invention provides a method, a system, a BS and a mobile terminal device for communication, which may perform transmission for open-loop and closed-loop users at the same time and improve a utilization rate of system frequency spectrum.
In order to achieve the above purpose, according to the first aspect the present invention provides a method for communication, where the method includes in its first implementation form:

  receiving, by a base station, Channel State Information, CSI, of a Line of Sight, LOS, signal of an open-loop mobile terminal device, wherein the CSI of the LOS signal is obtained by eliminating CSI of a multi-path signal in the CSI of the open-loop mobile terminal device;
  obtaining, by the base station, CSI of a closed-loop mobile terminal device having a channel that is orthogonal to a channel of the open-loop mobile terminal device; performing, by the base station, pre-coding calculation by using the CSI of the LOS signal of the open-loop mobile terminal device and the CSI of the closed-loop mobile terminal device; and
  sending, by the base station, communication data by using a result of the pre-coding calculation to the open-loop mobile terminal device.

The method includes in its second implementation form:

  obtaining, by an open-loop mobile terminal device, Channel State Information, CSI, of a Line of Sight, LOS, signal of the open-loop mobile terminal device by eliminating CSI of a multi-path signal in the CSI of the open-loop mobile terminal device ;
  sending, by the open-loop mobile terminal device, the CSI of the LOS signal of the open-loop mobile terminal device to a Base Station, BS, wherein the CSI of the LOS signal of the open-loop mobile terminal device is used for the BS to determine a communication solution; and
  receiving, by the open-loop mobile terminal device, communication data sent by the BS.

The present invention provides according to the second aspect a base station (BS), where the BS includes:

a channel information receiving unit, configured to receive Channel State Information, CSI, of a Line of Sight, LOS, signal of an open-loop mobile terminal device that is obtained by eliminating CSI of a multi-path signal in the CSI of the open-loop mobile terminal device;

a closed-loop channel information obtaining unit, configured to obtain CSI of a closed-loop mobile terminal device having a channel that is orthogonal to a channel of the open-loop mobile terminal device;

a pre-coding unit, configured to perform pre-coding calculation by using the CSI sent by the open-loop mobile terminal device and the CSI of the closed-loop mobile terminal device; and

a sending unit, configured to send communication data performed pre-coding calculation to the open-loop mobile terminal device.

According to the third aspect the present invention provides an open-loop mobile terminal device, where the open-loop mobile terminal device includes:

a channel information obtaining unit, configured to obtain Channel State Information, CSI, of the open-loop mobile terminal device;

a filtering unit, configured to obtain CSI of a Line of Sight, LOS, signal of the open-loop mobile terminal device by eliminating CSI of a multi-path signal in the CSI of the open-loop mobile terminal device;

a sending unit, configured to send the CSI of the LOS signal of the open-loop mobile terminal device to a Base Station, BS, wherein the CSI of the LOS signal of the open-loop mobile terminal device is used for the BS to determine a communication solution; and

a receiving unit, configured to receive communication data sent by the BS.1

According to the technical solutions of the present invention, by obtaining the CSI of the LOS part of the user and the CSI of the closed-loop user having a channel that is orthogonal to the channel of the user, the open-loop and closed-loop users can be scheduled together in downlink transmission, thereby effectively improving multi-user diversity, and increasing the system total capacity. Furthermore, by respectively performing pre-coding on the user and the closed-loop user, interference between the users can be pre-processed, so that the collaborative BS can adapt to changes of different user receiving antennas, thereby improving a utilization rate of system frequency spectrum.

## BRIEF DESCRIPTION OF THE DRAWINGS

To illustrate the technical solutions according to the embodiments of the present invention more clearly, the accompanying drawings for describing the embodiments are introduced briefly in the following.

FIG. 1 is a flow chart of a method for collaborative communication according to an embodiment of the present invention;
FIG. 2 is an algorithm flow chart of using a Rician factor of a user to determine a working mode of a mixed SDMA system according to an embodiment of the present invention;
FIG. 3 is an example for selecting a working mode for the user under three collaborative BSs according to FIG. 2;
FIG. 4 is an application scenario that two collaborative BSs mixedly schedule an open-loop user and two closed-loop users;
FIG 5 is an emulation result of system total capacity when only one closed-loop user can be selected in the application scenario shown in FIG 4;
FIG 6 is an emulation result of system total capacity when a plurality of closed-loop users can be selected in the application scenario shown in FIG 4;
FIG 7 is a flow chart of another method for collaborative communication according to an embodiment of the present invention;
FIG 8 is a composition view of a system for collaborative communication according to an embodiment of the present invention;
FIG 9 is an architectural view of a mixed SDMA in downlink transmission according to an embodiment of the present invention;
FIG 10 is a functional structural view of a BS according to an embodiment of the present invention; and
FIG 11 is a functional structural view of a mobile terminal device according to an embodiment of the present invention.

## DETAILED DESCRIPTION OF THE EMBODIMENTS

The following describes the technical solutions according to the embodiments of the present invention clearly with reference to the accompanying drawings in the embodiments of the present invention.

## Embodiment 1

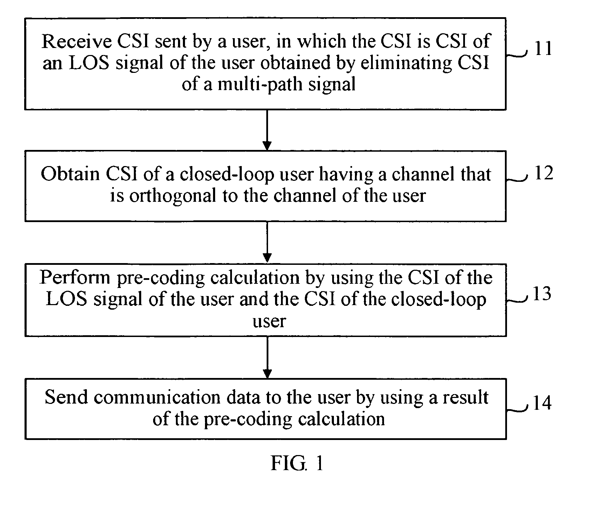

An embodiment of the present invention provides a method for collaborative communication. Referring to FIG 1, the method includes the following steps.

Step 11: Receive CSI sent by a user, in which the CSI is CSI of an LOS signal of the user that is obtained by eliminating CSI of a multi-path signal.

It should be understood that, in this embodiment, the user may be regarded as a special open-loop user who may feed back certain CSI under a specific condition. In this embodiment, it may be understood that operations are performed on a traditionally general open-loop user, and such user may feed back some CSI.

As for an open-loop user, it is assumed that a downlink channel matrix of an $n^{th}$ BS and an $m^{th}$ open-loop user is a Rician channel which may be represented by $\mathbf{G}_{m,n}$, and an expression may be:

$$\mathbf{G}_{m,n} = \sqrt{\frac{K_{m,n}}{K_{m,n}+1}}\eta_{m,n}\hat{\mathbf{G}}_{m,n} + \sqrt{\frac{1}{K_{m,n}+1}}\eta_{m,n}\tilde{\mathbf{G}}_{m,n}, \forall\, m=1,2,\cdots,M; n=1,2,\cdots,N,$$

where $\left(\overline{\mathbf{G}}_{m,n} = \sqrt{\frac{K_{m,n}}{K_{m,n}+1}}\eta_{m,n}\hat{\mathbf{G}}_{m,n}\right) \in C^{n_R \times n_T}$ is an LOS part of the Rician channel, $\sqrt{\frac{1}{K_{m,n}+1}}\eta_{m,n}\tilde{\mathbf{G}}_{m,n} \in C^{n_R \times n_T}$ is a Rayleigh channel part of the Rician channel, $K_{m,n}$ is a Rician factor, that is, a power ratio of the LOS part to the Rayleigh part, and $\eta_{m,n}$ is path loss, that is, a function of the distance between the BS and a mobile terminal.

An aggregated channel matrix of the $m^{th}$ open-loop user is expressed as

$$\mathbf{G}_m = \begin{bmatrix} \mathbf{G}_{m,1} & \mathbf{G}_{m,2} & \ldots & \mathbf{G}_{m,N} \end{bmatrix}, \forall\, m=1,2,\ldots,M.$$

Because the CSI of the LOS part of the open-loop user changes slowly, according to this embodiment, the CSI of the open-loop user is estimated based on a sliding window.

An initial condition is that: as for n=12,..., N, $\overline{\mathbf{G}}_{m,n}^{(new)} = \overline{\mathbf{G}}_{m,n}^{(old)} = \overline{\mathbf{G}}_{m,n}^{(0)}$; as for the $m^{th}$ open-loop user, m=1, 2, ..., M, at every T channel moments, after T channel coefficients are collected, an updated channel estimation value calculated for the $m^{th}$ open-loop user is $\overline{\mathbf{G}}_{m,n}^{(new)} = \dfrac{\overline{\mathbf{G}}_{m,n}^{(old)} + \sum\limits_{t=1}^{T}\mathbf{G}_{m,n}^{(t)}}{T*\text{fading rate}+1}$, where $\mathbf{G}_{m,n}^{(t)}$ represents a $t^{th}$

channel coefficient in T channels.

That is, a non-LOS part in the CSI of the open-loop user with rapid CSI change is filtered out based on a sliding window algorithm, and average CSI of the LOS part in the CSI with slow CSI change is obtained, where T is the size of the sliding window, and the selection of T should depend on a channel fading rate.

Step 12: Obtain CSI of a closed-loop user having a channel that is orthogonal to a channel of the user.

A principle for selecting a closed-loop user is that interference on the user is reduced as much as possible. A user having a channel that is orthogonal to the channel of the closed-loop user is least influenced by the closed-loop user; definitely, the interference is small for a situation approximate to the orthogonality, and a closed-loop user having a channel that is approximately orthogonal to the channel of the user may also be selected within an acceptable scope of the interference. The chordal distance of a channel direction vector of the open-loop user and a channel direction vector of a closed-loop user to be selected is calculated, and the closed-loop user is scheduled according to the chordal distance.

As for a closed-loop user, it is assumed that a downlink channel matrix of an $n^{th}$ BS and a $k^{th}$ closed-loop user is a Rayleigh channel which may be represented by $\mathbf{H}_{k,n} \in C^{n_R \times n_T}$, and an expression may be:

$$\mathbf{H}_{k,n} = \eta_{k,n} \tilde{\mathbf{H}}_{k,n}, \forall\, k = 1, 2, \cdots, K; n = 1, 2, \cdots, N,$$

where $\eta_{k,n}$ is path loss, that is, a function of the distance between the BS and the mobile terminal.

An aggregated channel matrix of the $k^{th}$ closed-loop user is expressed as

$$\mathbf{H}_k = \begin{bmatrix} \mathbf{H}_{k,1} & \mathbf{H}_{k,2} & \cdots & \mathbf{H}_{k,N} \end{bmatrix}, \forall\, k = 1, 2, \cdots, K.$$

As the CSI of the closed-loop changes slowly, Singular Value Decomposition (SVD) is performed on an aggregated channel coefficient to obtain:

$$\mathbf{H}_k = \mathbf{U}_k \begin{bmatrix} \mathbf{S}_k & \mathbf{0}_{n_R \times (Nn_T - n_R)} \end{bmatrix} \begin{bmatrix} \mathbf{V}_k^{(1)} & \mathbf{V}_k^{(0)} \end{bmatrix}^\dagger = \mathbf{U}_k \mathbf{S}_k \begin{bmatrix} \mathbf{V}_k^{(1)} \end{bmatrix}^\dagger,$$

where $\begin{bmatrix} & \end{bmatrix}^\dagger$ represents conjugate transposition.

A pre-coding index is fed back based on a codebook $\varphi = \{\mathbf{Q}_1, \mathbf{Q}_2, ..., \mathbf{Q}_{2^B}\}$ mutually known by the mobile terminal and the BS. The pre-coding index is

$$J_k = \arg\min_{\mathbf{Q}_i \in \varphi} d_c\left(\mathbf{Q}_i, \mathbf{V}_k^{(1)}\right), \quad d_c\left(\mathbf{Q}_i, \mathbf{V}_k^{(1)}\right) = \frac{1}{\sqrt{2}} \left\| \mathbf{Q}_i \mathbf{Q}_i^\dagger - \mathbf{V}_k^{(1)} \begin{bmatrix} \mathbf{V}_k^{(1)} \end{bmatrix}^\dagger \right\|_F,$$

where $J_k$ is a codebook index which can most accurately quantize a channel coefficient $\mathbf{V}_k^{(1)}$ of the user k, and

$d_c\left(\mathbf{Q}_i, \mathbf{V}_k^{(1)}\right)$ represents the chordal distance between the BS and the mobile terminal. On the BS side, the codebook of the index corresponding to $J_k$ is found from codebooks according to the codebook index fed back by the mobile terminal.

A closed-loop user is selected based on the channel that is orthogonal to the channel of the open-loop user, and a specific algorithm is as follows:

an average value of the aggregated channel coefficients of m open-loop users is

$$\bar{\mathbf{G}} = \begin{bmatrix} \bar{\mathbf{G}}_1^\dagger & \bar{\mathbf{G}}_2^\dagger \dots \bar{\mathbf{G}}_M^\dagger \end{bmatrix}^\dagger \forall\, m = 1, 2, \dots, M, \text{ and}$$

the SVD is performed on the average value of the aggregated channel coefficients to obtain

$$\bar{\mathbf{G}} = \mathbf{U}_{\bar{\mathbf{G}}} \begin{bmatrix} \mathbf{S}_{\bar{\mathbf{G}}} & \mathbf{0} \end{bmatrix} \begin{bmatrix} \mathbf{V}_{\bar{\mathbf{G}}}^{(1)} & \mathbf{V}_{\bar{\mathbf{G}}}^{(0)} \end{bmatrix}^\dagger.$$

The chordal distance of the channel direction vector of the open-loop user and a channel direction vector of a closed-loop user to be selected is calculated, and a closed-loop user enabling the chordal distance to be the maximum or close to the maximum is selected to perform scheduling.

An algorithm is specifically as follows:

performing initialization: j=0; selecting a user index $\kappa_s$ ={1,2,...,$K$}; outputting the user index, and setting that $\kappa_o$ = $\Phi$,

$$While\ (j <= K_{cl}),\ do:$$

$$(1)\ \ j = j+1;$$

$$(2)\ \ K_j = \arg\max_{k \in (\kappa_s \backslash \kappa_o)} d_c\left(\mathbf{Q}_{J_k}, \mathbf{V}_{\overline{\mathbf{G}}}^{(1)}\right);$$

$$(3)\ \text{Set}\ \ \kappa_o = \kappa_o \cup K_j;$$

In the meantime, the number of selected closed-loop users satisfies: (the number of open-loop users + the number of selected closed-loop users) $\times$ the number of receiving antennas $\leq$ N times of transmitter antennas of a single BS, and the number of collaborative BSs is a positive integer. That is, the sum of a total number of antennas of open-loop users (the number of the open-loop users multiplied by the number of antennas of each open-loop user) and a total number of antennas of the closed-loop users (the number of the closed-loop users multiplied by the number of antennas of each closed-loop user) should be smaller than a total number of antennas of collaborative BSs.

Step 13: Perform pre-coding calculation by using the CSI of the LOS signal of the user and the CSI of the closed-loop user.

The pre-coding may be respectively performed on the open-loop and closed-loop users by using a Block Diagonal (BD)-based linear pre-coding algorithm. The pre-coding algorithm of an open-loop user is as follows:

① The SVD is performed on the open-loop user:

$$\overline{\mathbf{G}}_m = \mathbf{U}_m \begin{bmatrix} \Sigma_m & \mathbf{0} \end{bmatrix} \begin{bmatrix} \mathbf{V}_m^{(1)} & \mathbf{V}_m^{(0)} \end{bmatrix}^\dagger, \forall\ m = 1,2,\ldots,M \quad , \forall\ m=1,2,\ldots,M, \text{where} \quad \mathbf{V}_m^{(1)} \quad \text{is a non-null}$$

space of a channel coefficient.

② It is assumed that a system supports $K_{cl}$ closed-loop users at the same time, and quantized channel coefficients are $\mathbf{Q}_1, \mathbf{Q}_2,\ldots,\mathbf{Q}_{K_{cl}}$.

③ An interference channel of the open-loop user m is

$$\overline{\mathbf{G}}_{-m} = \left[ \left(\mathbf{V}_1^{(1)}\right)^\dagger \ \left(\mathbf{V}_2^{(1)}\right)^\dagger \cdots \left(\mathbf{V}_{m-1}^{(1)}\right)^\dagger \ \left(\mathbf{V}_{m+1}^{(1)}\right)^\dagger \cdots \left(\mathbf{V}_M^{(1)}\right)^\dagger \ \mathbf{Q}_1^\dagger \ \mathbf{Q}_2^\dagger \cdots \mathbf{Q}_{K_{cl}}^\dagger \right]^\dagger.$$

④ The SVD is performed on the interference channel:

$$\overline{\mathbf{G}}_{-m} = \mathbf{U}_{-m} \begin{bmatrix} \Sigma_{-m} & \mathbf{0} \end{bmatrix} \begin{bmatrix} \mathbf{V}_{-m}^{(1)} & \mathbf{V}_{-m}^{(0)} \end{bmatrix}^\dagger, \forall\ m = 1,2,\ldots,M.$$

⑤ An equivalent channel after the BD calculation is performed on the open-loop user is

$$\overline{\mathbf{G}}_m^{(e)} = \overline{\mathbf{G}}_m \mathbf{V}_{-m}^{(0)} .$$

⑥ The SVD is performed on the equivalent channel:

$$\overline{\mathbf{G}}_m^{(e)} = \mathbf{U}_m^{(e)} \begin{bmatrix} \Sigma_m^{(e)} & \mathbf{0} \end{bmatrix} \begin{bmatrix} \mathbf{V}_m^{(e,1)} & \mathbf{V}_m^{(e,0)} \end{bmatrix}^{\dagger}, \ \forall \, m = 1,2,\ldots,M .$$

⑦ The obtained pre-coding of the open-loop user is $\mathbf{W}_m = \mathbf{V}_{-m}^{(0)} \left( \mathbf{V}_m^{(e,1)} \right)_L$, $\forall \, m,\, = 1,\, 2\ldots,M.$

Similarly, the pre-coding code of a closed-loop user is obtained by the calculation process as follows:

$$\hat{\mathbf{H}}_{-k} = \begin{bmatrix} \left(\mathbf{V}_1^{(1)}\right)^{\dagger} & \left(\mathbf{V}_2^{(1)}\right)^{\dagger} & \cdots & \left(\mathbf{V}_M^{(1)}\right)^{\dagger} & \mathbf{Q}_1^{\dagger} & \mathbf{Q}_2^{\dagger} & \cdots & \mathbf{Q}_{k-1}^{\dagger} & \mathbf{Q}_{k+1}^{\dagger} & \cdots \mathbf{Q}_{K_{cl}}^{\dagger} \end{bmatrix}^{\dagger}$$

$$\hat{\mathbf{H}}_{-k} = \mathbf{U}_{-k} \begin{bmatrix} \mathbf{S}_{-k} & \mathbf{0} \end{bmatrix} \begin{bmatrix} \mathbf{V}_{-k}^{(1)} & \mathbf{V}_{-k}^{(0)} \end{bmatrix}^{\dagger}, \ \forall \, k = 1,2,\ldots,K_{cl}$$

$$\hat{\mathbf{H}}_k^{(e)} = \mathbf{S}_k \mathbf{V}_{-k}^{(0)} \ \hat{\mathbf{H}}_k^{(e)} = \mathbf{U}_k^{(e)} \begin{bmatrix} \mathbf{S}_k^{(e)} & \mathbf{0} \end{bmatrix} \begin{bmatrix} \mathbf{V}_k^{(e,1)} & \mathbf{V}_k^{(e,0)} \end{bmatrix}^{\dagger}, \ \forall \, k = 1,2,\ldots,K$$

$$\mathbf{F}_k = \mathbf{V}_{-k}^{(0)} \left( \mathbf{V}_k^{(e,1)} \right)_L$$

In this way, by using mixed CSI of the open-loop user and the closed-loop user, and using the pre-coding solution based on the BD algorithm, the interference between the users can be pre-processed.

Step 14: Send communication data to the user by using the result of the pre-coding calculation.

According to the method for collaborative communication provided by the embodiment of the present invention, by obtaining the CSI of the LOS part of the user and the CSI of the closed-loop user having the channel that is orthogonal to the channel of the user, the open-loop and closed-loop users can be scheduled together in downlink transmission, thereby effectively improving multi-user diversity, and therefore increasing the system total capacity. Furthermore, by respectively performing the pre-coding on the user and the closed-loop user, the interference between the users can be pre-processed, so that a collaborative BS can adapt to changes of different user receiving antennas, thereby improving a utilization rate of system frequency spectrum

In order to ensure the performance of a mixed SDMA system, before the CSI of the closed-loop user having the channel that is orthogonal to the channel of the user is obtained, the method further includes the following:

Determine a working mode of the mixed SDMA system according to the Rician factor of the user.

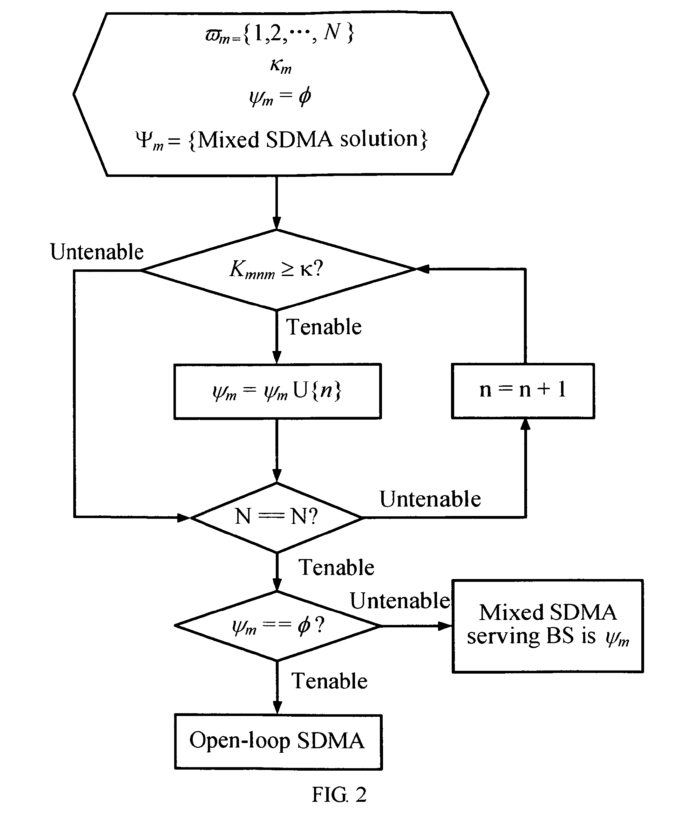

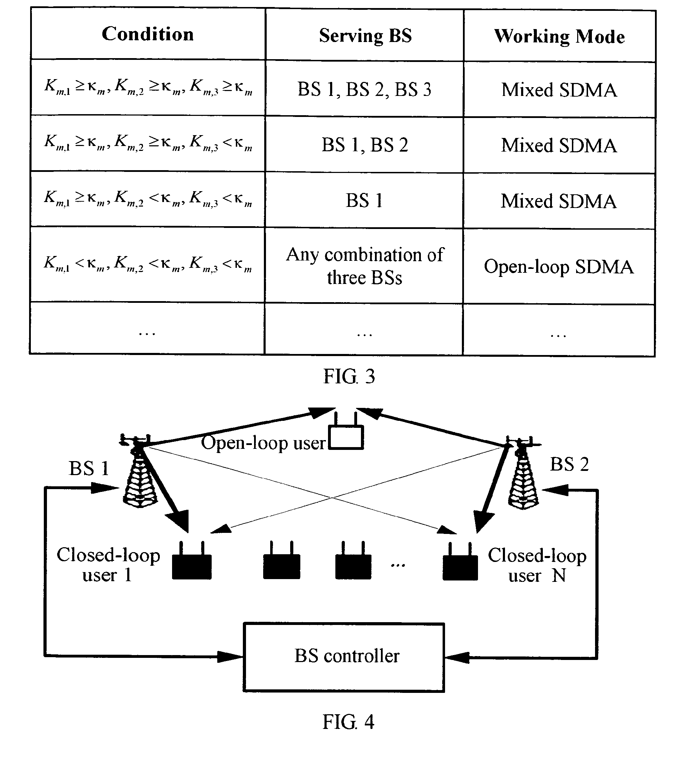

Details of this process may be obtained with reference to FIG. 2, when a user is scheduled, each of BSs going to provide services in collaborative BSs calculate a Rician factor of the user, the BSs going to provide services are traversed to compare calculated Rician factors with a preset threshold, and as long as one calculated Rician factor is greater than the preset threshold, the working mode is switched to the working mode of the mixed SDMA system, and the BS going to provide services with the calculated Rician factor greater than the preset threshold is determined to be the BS providing services at the same time. Only all the calculated Rician factors are less than the preset threshold, the existing working mode of an open-loop SDMA system is selected. FIG 3 is an example that the working mode is selected for the user under the condition of three collaborative BSs.

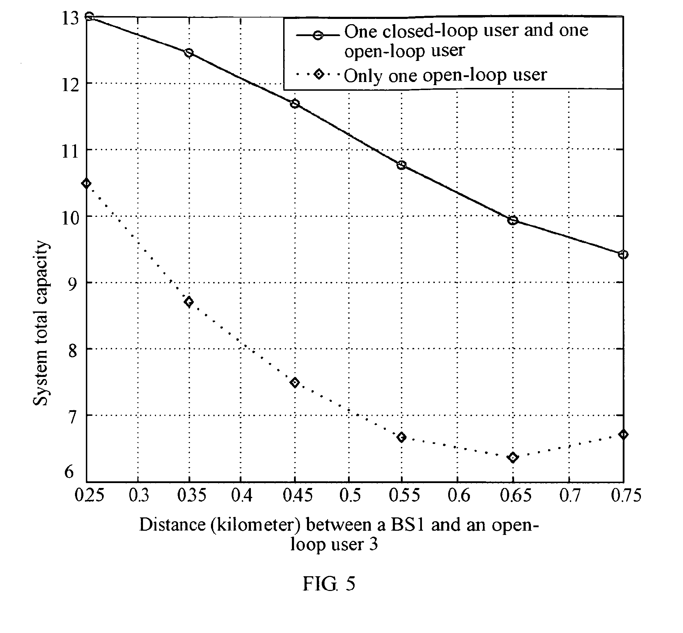

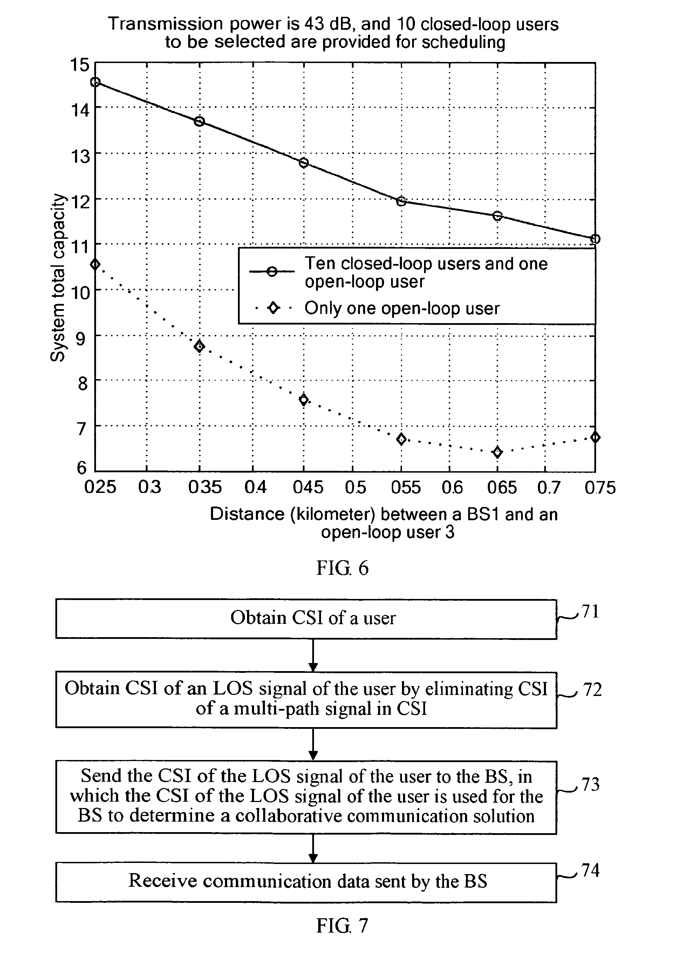

For example, referring to FIG 4, an application scenario in which two collaborative BSs (BS 1 and BS 2) mixedly schedule an open-loop user and N closed-loop users is shown. FIG 5 is an emulation result of system total capacity when transmission power is 43 dB and only one closed-loop user may be selected. FIG 6 is an emulation result of system total capacity when transmission power is 43 dB and 10 closed-loop users may be selected. It may be known from the emulation results of FIG 5 and FIG 6 that, even only one closed-loop user may be selected, the system total capacity of multiplexing open-loop and closed-loop users (the number of available bits for each unit channel) is increased greatly than that of serving only one open-loop user; furthermore, the more the number of closed-loop users to be selected is, the more system total capacity is increased.Furthermore, after the pre-coding calculation is performed by using the CSI of the LOS signal of the user and the CSI of the closed-loop user, the method further includes the following:

Perform power allocation according to weights of the user and the closed-loop user.

When power of each antenna is limited, which is more common than that the total power of the BS is limited, in order to ensure a maximum system capacity after the weighting and ensure the performance of the user, a power allocation solution provided by an embodiment of the present invention is as follows.

It is assumed M open-loop users and $K_{cl}$ closed-loop users exist, G users exist in total $G=M+K_{cl}$, and $\{F_1, F_1,..., F_G\}$ and $\{P_1, P_1,..., P_G\}$ are respectively the pre-coding power and allocated power of the G users. When the collaborative BS transmits L data streams independent to each other to each mobile terminal, a power allocation algorithm is as follows:

$$\max_{\{\mathbf{P}_1,\mathbf{P}_2,...,\mathbf{P}_G\}} \left\{ \sum_{g=1}^{G}\sum_{l=1}^{L} \alpha_g \log_2\left(1+\frac{1}{\sigma^2}\lambda_{g,l}^2 P_{g,l}\right)\right\}$$

$$s.t. \quad \sum_{g=1}^{G}\sum_{l=1}^{L}\left\{\left|\mathbf{F}_g^{(g,l)}\right|^2 P_{g,l}\right\} \le P_{max}, \forall g=1,2,...,Nn_T \quad (*)$$

$$P_{g,l} \ge 0, \forall q,l$$

where $\alpha_g$ is the weight allocated to each of the G users, $\mathbf{F}_g^{(g,l)}$ is a $(g,l)^{th}$ element of $\mathbf{F}_g$, $P_{max}$ is limit power of each antenna, and (*) represents that the power allocation is solved by convex optimization.

In this way, downlink baseband signals of M open-loop users and K closed-loop users respectively are:

$$\mathbf{y}_m = \mathbf{G}_m\left(\sum_{j=1}^{M}\mathbf{W}_j\mathbf{P}_j\mathbf{d}_j + \sum_{k=1}^{K}\mathbf{F}_k\mathbf{D}_k\mathbf{d}_k\right)+\mathbf{z}, \forall m=1,2,\cdots,M,$$

$$\mathbf{y}_k = \mathbf{H}_k\left(\sum_{m=1}^{M}\mathbf{W}_m\mathbf{P}_m\mathbf{d}_m + \sum_{j=1}^{K}\mathbf{F}_j\mathbf{D}_j\mathbf{d}_j\right)+\mathbf{z}, \forall k=1,2,\cdots,K,$$

where

$\mathbf{y}_m \in C^n{}_R{}^{\times 1}$, $\mathbf{y}_k \in C^n{}_R{}^{\times 1}$ respectively represent receiving signals of the $m^{th}$ open-loop user and the $k^{th}$ closed-loop user;
$\mathbf{W}_m \in C^n{}_T{}^{\times L}$, $\mathbf{F}_k \in C^n{}_T{}^{\times L}$ respectively represent pre-coding of the $m^{th}$ open-loop user and the $k^{th}$ closed-loop user;
$\mathbf{P}_m \in C^{L \times L}$, $\mathbf{D}_k \in C^{L \times L}$ respectively represent power allocation matrixes of the $m^{th}$ open-loop user and the $k^{th}$ closed-loop user; and

$\mathbf{d}_m \in C^{n_R \times 1}$, $\mathbf{d}_k \in C^{n_R \times 1}$ respectively represent open-loop and closed-loop user signals bringing an interference signal for the $m^{th}$ open-loop user and the $k^{th}$ closed-loop user, and $z \in C^n{}_R{}^{\times 1}$ represents White Gaussian Noise (WGN).

According to this embodiment, by adopting the algorithm performing the power allocation based on the weights of the users, quality and fairness of service for users can be balanced, and the performance and system capacity of users having different path loss and Rician factors can be ensured.

**Embodiment 2**

An embodiment of the present invention provides another method for collaborative communication. Referring to FIG. 7, the method includes the following steps.

Step 71: Obtain CSI of a user.

It should be understood that, in this embodiment, the user may be regarded as a special open-loop user that may feed back certain CSI under a specific condition.

As for an open-loop user, it is assumed that a downlink channel matrix of an nth BS and an $m^{th}$ open-loop user is a Rician channel which may be represented by $\mathbf{G}_{m,n}$, and an expression may be:

$$\mathbf{G}_{m,n} = \sqrt{\frac{K_{m,n}}{K_{m,n}+1}}\eta_{m,n}\hat{\mathbf{G}}_{m,n} + \sqrt{\frac{1}{K_{m,n}+1}}\eta_{m,n}\tilde{\mathbf{G}}_{m,n}, \ \forall\, m=1,2,\cdots,M;\ n=1,2,\cdots,N,$$

where $\left(\overline{\mathbf{G}}_{m,n} = \sqrt{\dfrac{K_{m,n}}{K_{m,n}+1}}\eta_{m,n}\hat{\mathbf{G}}_{m,n}\right) \in C^{n_R \times n_T}$ is an LOS part of the Rician channel,

$\sqrt{\dfrac{1}{K_{m,n}+1}}\eta_{m,n}\tilde{\mathbf{G}}_{m,n} \in C^{n_R \times n_T}$ is a Rayleigh channel part of the Rician channel, $K_{m,n}$ is a Rician factor, that is, a power ratio of the LOS part to the Rayleigh part, and $\eta_{m,n}$ is path loss, that is, a function of the distance between the BS and a mobile terminal.

An aggregated channel matrix of the $m^{th}$ open-loop user is expressed as

$$\mathbf{G}_m = \begin{bmatrix} \mathbf{G}_{m,1} & \mathbf{G}_{m,2} & \cdots & \mathbf{G}_{m,N} \end{bmatrix}, \ \forall\, m=1,2,\ldots,M \ .$$

Step 72: Obtain CSI of an LOS signal of the user by eliminating CSI of a multi-path signal in the CSI of the user.

Because the CSI of the LOS part of the open-loop user changes slowly, according to this embodiment, the CSI of the open-loop user is estimated based on a sliding window.

An initial condition is that: as for n=1, 2, ..., N, $\overline{\mathbf{G}}_{m,n}^{(new)} = \overline{\mathbf{G}}_{m,n}^{(old)} = \overline{\mathbf{G}}_{m,n}^{(0)}$,

as for the $m^{th}$ open-loop user, m=1, 2, ..., M, at every T channel moments, after T channel coefficients are collected, an updated channel estimation value calculated for the $m^{th}$ open-loop user is $\overline{\mathbf{G}}_{m,n}^{(new)} = \dfrac{\overline{\mathbf{G}}_{m,n}^{(old)} + \sum\limits_{t=1}^{T}\mathbf{G}_{m,n}^{(t)}}{T*\text{fading rate}+1}$,

where $\mathbf{G}_{m,n}^{(t)}$ represents $t^{th}$ channel coefficient in the T channels.

That is, the open-loop user filters out a non-LOS part in the CSI with rapid CSI change based on the sliding window algorithm, and obtains average CSI of the LOS part with slow CSI change. T is the size of the sliding window, and the selection of T should depend on a channel fading rate.

Step 73: Send the CSI of the LOS signal of the user to the BS, in which the CSI of the LOS signal of the user is used for the BS to determine a collaborative communication solution.

Details about how the BS determines the collaborative communication solution based on the CSI of the LOS signal of the open-loop user may be obtained with reference to relevant parts in Embodiment 1.

Step 74: Receive communication data sent by the BS.

According to the method for collaborative communication provided by the embodiment of the present invention, by obtaining the CSI of the LOS part of the user, and sending the CSI of the LOS signal of the user to the BS, the BS can determine the collaborative communication solution, and the open-loop and closed-loop users are scheduled together in downlink transmission, thereby effectively improving multi-user diversity, improving a utilization rate of system frequency spectrum.

## Embodiment 3

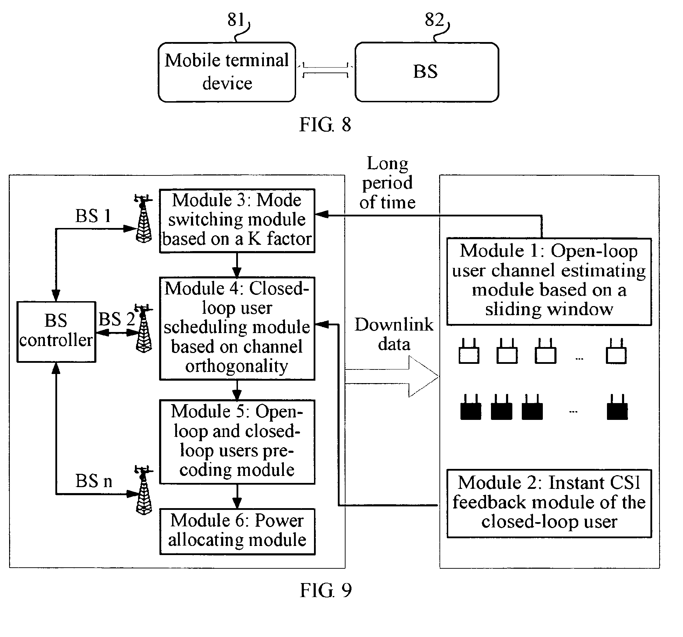

By applying the above method embodiments, an embodiment of the present invention provides a collaborative communication system. Referring to FIG. 8, the system includes a mobile terminal device 81 and a BS 82.

The mobile terminal device 81 is configured to obtain CSI of an LOS signal of a user, send the CSI of the LOS signal of the user to the BS for the BS to determine a collaborative communication solution, and receive communication data sent by the BS.

The BS 82 is configured to receive the CSI of the LOS signal of the user that is sent by the mobile terminal, obtain CSI of a closed-loop user having a channel that is orthogonal to a channel of the user, perform pre-coding calculation by using the CSI of the LOS signal of the user and the CSI of the closed-loop user, and send the communication data to the user by using a result of the pre-coding calculation.

It should be understood that, in this embodiment, the user may be regarded as a special open-loop user that may feed back certain CSI under a specific condition.

The mixed SDMA architecture in downlink transmission may be obtained with reference to FIG. 9, and the architecture includes N collaborative serving BSs, M open-loop users (also referred to as high-speed users), and K closed-loop users (also referred to as low-speed users), in which each BS has $n_T$ antennas, each terminal has $n_R$ antennas, and a channel of the open-loop user is a Rician channel. This architecture may be applicable to a cellular network.

This architecture includes six functional modules, that is, a module for estimating an open-loop user channel average value based on a sliding window, an instant CSI feeding back module of the closed-loop user, a mode switching module based on a Rician factor, a closed-loop user selecting and scheduling module based on orthogonality, an open-loop and closed-loop user pre-coding module, and a power allocating module.

According to the collaborative communication system provided by the embodiment of the present invention, the mobile terminal device 81 sends the obtained CSI of the LOS part of the user to the BS 82, and the BS 82 performs the pre-coding calculation by using the CSI of the LOS signal of the user and the CSI of the closed-loop user having the channel that is orthogonal to the channel of the user, so the open-loop user and the closed-loop user can be scheduled together in the downlink transmission, thereby effectively improving multi-user diversity, and increasing a utilization rate of system frequency spectrum.

## Embodiment 4

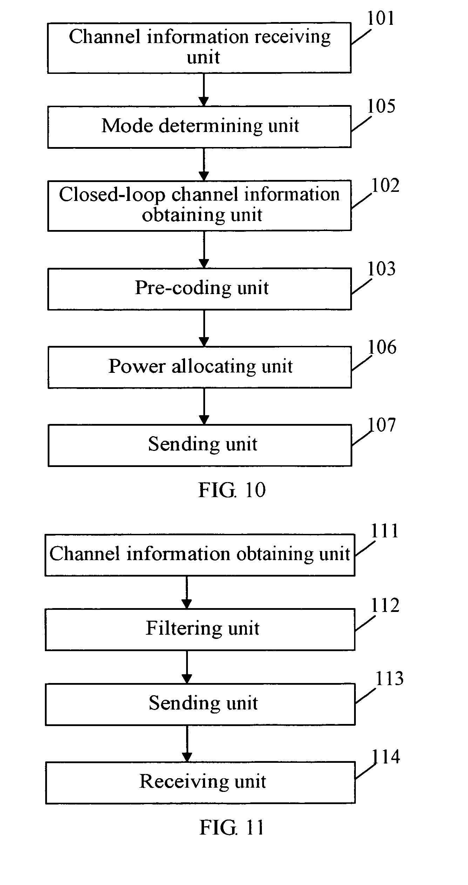

An embodiment of the present invention further provides a BS. Referring to FIG. 10, the BS includes a channel information receiving unit 101, a closed-loop channel information obtaining unit 102, a pre-coding unit 103, and a sending unit 104.

The channel information receiving unit 101 is configured to receive CSI sent by a user, in which the CSI is CSI of an LOS signal of the user obtained by eliminating CSI of a multi-path signal.

The closed-loop channel information obtaining unit 102 is configured to obtain CSI of a closed-loop user having a channel that is orthogonal to a channel of the user.

The pre-coding unit 103 is configured to perform pre-coding calculation by using the CSI of the LOS signal sent by the user and the CSI of the closed-loop user.

The sending unit 104 is configured to send communication data to the user by using the result of the pre-coding calculation.

It should be understood that, in this embodiment, the user may be regarded as a special open-loop user that may feed back certain CSI under a specific condition.

The closed-loop channel information obtaining unit 102 includes a closed-loop user selecting module.

The closed-loop user selecting module is configured to calculate the chordal distance of a channel direction vector of the user and a channel direction vector of a closed-loop user to be selected, and select a closed-loop user according to the chordal distance to perform scheduling.

In order to ensure performance of a mixed SDMA system, before the closed-loop channel information obtaining unit 102 obtains the CSI of the closed-loop user having the channel that is orthogonal to the channel of the user, the BS further includes a mode determining unit 105.

The mode determining unit 105 is configured to determine a working mode of the mixed SDMA system according to a Rician factor of the user. A specific method for determining the mode may be obtained with reference to the above method embodiments.

After the pre-coding unit 103 performs the pre-coding calculation by using the CSI of the LOS signal sent by the user and the CSI of the closed-loop user, the BS further includes a power allocating unit 106.

The power allocating unit 106 is configured to perform power allocation according to weights of the user and the closed-loop user. A specific calculation of the power allocation may also be obtained with reference to the above method embodiments.

According to the BS provided by the embodiment of the present invention, the CSI receiving unit 101 receives the CSI of the LOS part of the user, and the closed-loop channel information obtaining unit 102 obtains the CSI of the closed-loop user having the channel that is orthogonal to the channel of the user, the open-loop and closed-loop users can be scheduled together in downlink transmission, thereby effectively improving multi-user diversity, and increasing the system total capacity. Furthermore, the pre-coding unit 104 performs the pre-coding on the user and the closed-loop user respectively, interference between the users can be pre-processed, so that the BS can adapt to changes of different user receiving antennas, thereby improving a utilization rate of system frequency spectrum.

Furthermore, the mode determining unit 105 determines a working mode of the mixed SDMA system according to the Rician factor of the user, so that the performance of the mixed SDMA system can be ensured. The power allocating unit 106 is configured to perform power allocation according to the weights of the user and the closed-loop user, so that quality and fairness of service for users can be balanced, and the performance and system capacity of users having different path loss and Rician factors can be ensured.


**Embodiment 5**

An embodiment of the present invention further provides a mobile terminal device. Referring to FIG. 11, the mobile terminal device includes a channel information obtaining unit 111, a filtering unit 112, a sending unit 113, and a receiving unit 114.

The channel information obtaining unit 111 is configured to obtain CSI of a user.

The filtering unit 112 is configured to obtain CSI of an LOS signal of the user by eliminating CSI of a multi-path signal in the CSI of the user.

The sending unit 113 is configured to send the CSI of the LOS signal of the user to a BS, in which the CSI of the LOS signal of the user is used for the BS to determine a collaborative communication solution.

The receiving unit 114 is configured to receive communication data sent by the BS.

It should be understood that, in this embodiment, the user may still be regarded as a special open-loop user that may feed back certain CSI under a specific condition.

The filtering unit filters out the multi-path signal based on a sliding window algorithm to obtain average CSI of an LOS part in the CSI of the user, in which the size of the sliding window is determined by a channel fading rate.

Because the CSI of the LOS part of the open-loop user changes slowly, according to the mobile terminal device provided by this embodiment, the filtering unit 112 filters out a non-LOS part in the CSI with rapid CSI change based on the sliding window, and the CSI of the LOS part with slow CSI change is obtained. Furthermore, the sending unit 113 sends the CSI of the LOS signal of the open-loop user to the BS for the BS to determine a communication solution, so that on the BS side, the open-loop and closed-loop users can be multiplexed in downlink transmission, and the system total capacity is increased.

The method steps described by the embodiments disclosed by the present invention may be implemented through hardware, a software module performed by a processor, or a combination of the both. The software module may be configured in a RAM, a memory, a ROM, an electrically programmable ROM (EPROM), an electrically erasable programmable ROM, a register, a hard disk, a removable disk, a CD-ROM, or any other form of a storage medium.

**Claims**

1.  A method for communication, comprising:

    receiving (11), by a base station, Channel State Information, CSI, of a Line of Sight, LOS, signals of an open-loop mobile terminal device, wherein the CSI of the LOS signal is obtained by eliminating CSI of a multi-path signal in the CSI of the open-loop mobile terminal device;
    obtaining (12), by the base station, CSI of a closed-loop mobile terminal device having a channel that is orthogonal to a channel of the open-loop mobile terminal device;
    performing (13), by the base station, pre-coding calculation by using the CSI of the LOS signal of the open-loop mobile terminal device and the CSI of the closed-loop mobile terminal device; and
    sending (14), by the base station, communication data by using a result of the pre-coding calculation to the open-loop mobile terminal device.

2.  The method according to claim 1, wherein the obtaining (12) CSI of a closed-loop mobile terminal device having a channel that is orthogonal to a channel of the open-loop mobile terminal device comprises:

    calculating chordal distance of a channel direction vector of the open-loop mobile terminal device and a channel direction vector of a closed-loop mobile terminal device to be selected, and selecting a closed-loop mobile terminal device enabling the chordal distance to be the maximum.

3.  The method according to claim 1 or 2, wherein before the sending (14) communication data after the pre-coding calculation to the open-loop mobile terminal device, the method further comprises:

    performing power allocation according to weights of the open-loop mobile terminal device and the closed-loop mobile terminal device having a channel that is orthogonal to a channel of the open-loop mobile terminal device, and sending the data according to a result of the power allocation.

4.  A Base Station, BS, comprising:

    a channel information receiving unit (101), configured to receive Channel State Information, CSI, of a Line of Sight, LOS, signal of an open-loop mobile terminal device that is obtained by eliminating CSI of a multi-path signals in the CSI of the open-loop mobile terminal device;
    a closed-loop channel information obtaining unit (102), configured to obtain CSI of a closed-loop mobile terminal device having a channel that is orthogonal to a channel of the open-loop mobile terminal device;
    a pre-coding unit (103), configured to perform pre-coding calculation by using the CSI sent by the open-loop mobile terminal device and the CSI, of the closed-loop mobile terminal device; and
    a sending unit (107), configured to send communication data by using a result of the pre-coding calculation to the open-loop mobile terminal device.

5.  The BS according to claim 4, wherein the closed-loop channel information obtaining unit (102) comprises:

    a closed-loop mobile terminal device selecting module, configured to calculate chordal distance of a channel direction vector of the open-loop mobile terminal device and a channel direction vector of a closed-loop mobile terminal device to be selected, and select a closed-loop mobile terminal device enabling the chordal distance to be the maximum to perform scheduling.

6.  The BS according to claim 4 or 5, further comprising:

    a power allocating unit (106), configured to perform power allocation according to weights of the open-loop mobile terminal device and the closed-loop mobile terminal device, wherein a result of the power allocation is used for the sending unit to send the data according to the power allocation.

7.  An open-loop mobile terminal device, comprising:

    a channel information obtaining unit (111), configured to obtain Channel State Information, CSI, of the open-loop mobile terminal device;
    a filtering unit (112), configured to obtain CSI of a Line of Sight, LOS, signal of the open-loop mobile terminal device by eliminating CSI of a multi-path signal in the CSI of the open-loop mobile terminal device;
a sending unit (113), configured to send the CSI of the LOS signal of the open-loop mobile terminal device to a Base Station, BS, wherein the CSI of the LOS signals of the open-loop mobile terminal device is used for the BS to determine a communication solution; and
a receiving unit (114), configured to receive communication data sent by the BS.

8. The mobile terminal device according to claim 7, wherein the filtering unit (112) filters out the multi-path signal based on a sliding window algorithm to obtain average CSI of the LOS part in the CSI of the open-loop mobile terminal device, and the size of the sliding window is determined by a channel fading rate.

9. A method for communication, comprising:

obtaining, by an open-loop mobile terminal device, Channel State Information, CSI, of a Line of Sight, LOS, signal of the open-loop mobile terminal device by eliminating CSI of a multi-path signal in the CSI of the open-loop mobile terminal device ;
sending, by the open-loop mobile terminal device, the CSI of the LOS signal of the open-loop mobile terminal device to a Base Station, BS, wherein the CSI of the LOS signal of the open-loop mobile terminal device is used for the BS to determine a communication solution; and
receiving, by the open-loop mobile terminal device, communication data sent by the BS.

10. The method according to claim 9, wherein the obtaining CSI of an LOS signal of the open-loop mobile terminal device by eliminating CSI of a multi-path signal in the CSI of the open-loop mobile terminal device comprises:

filtering out the multi-path signal based on an algorithm of a sliding window, and obtaining average CSI of an LOS part in the CSI of the open-loop mobile terminal device.

11. The method according to claim 10 wherein the size of the sliding window is determined by a channel fading rate.

**Patentansprüche**

1. Kommunikationsverfahren, das Folgendes umfasst:

Empfangen (11) von Kanalzustandsinformationen, CSI, eines Sichtlinien-Signals, LOS-Signals, einer mobilen Steuer-Endgerätvorrichtung durch eine Basisstation, wobei die CSI des LOS-Signals durch das Eliminieren der CSI eines Mehrwegsignals in den CSI der mobilen Steuer-Endgerätvorrichtung erhalten werden;
Erhalten (12) der CSI einer mobilen Regel-Endgerätvorrichtung, die einen Kanal besitzt, der zu einem Kanal der mobilen Steuer-Endgerätvorrichtung orthogonal ist, durch die Basisstation;
Ausführen (13) einer Vorcodierungsberechnung unter Verwendung der CSI des LOS-Signals der mobilen Steuer-Endgerätvorrichtung und der CSI der mobilen Regel-Endgerätvorrichtung durch die Basisstation; und
Senden (14) durch die Basisstation von Kommunikationsdaten unter Verwendung eines Ergebnisses der Vorcodierungsberechnung an die mobile Steuer-Endgerätvorrichtung.

2. Verfahren nach Anspruch 1, wobei das Erhalten (12) der CSI einer mobilen Regel-Endgerätvorrichtung, die einen Kanal besitzt, der zu einem Kanal der mobilen Steuer-Endgerätvorrichtung orthogonal ist, Folgendes umfasst:

Berechnen eines Sehnenabstandes eines Kanalrichtungsvektors der mobilen Steuer-Endgerätvorrichtung und eines Kanalrichtungsvektors einer auszuwählenden mobilen Regel-Endgerätvorrichtung und Auswählen einer mobilen Regel-Endgerätvorrichtung, die es ermöglicht, dass der Sehnenabstand das Maximum ist.

3. Verfahren nach Anspruch 1 oder 2, wobei vor dem Senden (14) der Kommunikationsdaten nach der Vorcodierungsberechnung an die mobile Steuer-Endgerätvorrichtung das Verfahren ferner Folgendes umfasst:

Ausführen einer Leistungszuteilung in Übereinstimmung mit den Gewichten der mobilen Steuer-Endgerätvorrichtung und der mobilen Regel-Endgerätvorrichtung, die einen Kanal besitzt, der zu einem Kanal der mobilen Steuer-Endgerätvorrichtung orthogonal ist, und Senden der Daten in Übereinstimmung mit einem Ergebnis der Leistungszuteilung.

4. Basisstation, BS, die Folgendes umfasst:

eine Kanalinformations-Empfangseinheit (101), die konfiguriert ist, Kanalzustandsinformationen, CSI, eines Sichtlinien-Signals, LOS-Signals, einer mobilen Steuer-Endgerätvorrichtung zu empfangen, die durch das Eliminieren der CSI eines Mehrwegsignals in den CSI der mobilen Steuer-Endgerätvorrichtung erhalten werden; eine Regel-Kanalinformations-Erhalteeinheit (102), die konfiguriert ist, die CSI einer mobilen Regel-Endgerätvorrichtung, die einen Kanal besitzt, der zu einem Kanal der mobilen Steuer-Endgerätvorrichtung orthogonal ist, zu erhalten; eine Vorcodierungseinheit (103), die konfiguriert ist, eine Vorcodierungsberechnung unter Verwendung der von der mobilen Steuer-Endgerätvorrichtung gesendeten CSI und der CSI der mobilen Regel-Endgerätvorrichtung auszuführen; und eine Sendeeinheit (107), die konfiguriert ist, Kommunikationsdaten unter Verwendung eines Ergebnisses der Vorcodierungsberechnung an die mobile Steuer-Endgerätvorrichtung zu senden.

5. BS nach Anspruch 4, wobei die Regel-Kanalinformations-Erhalteeinheit (102) Folgendes umfasst:

ein Auswahlmodul für eine mobile Regel-Endgerätvorrichtung, das konfiguriert ist, einen Sehnenabstand eines Kanalrichtungsvektors der mobilen Steuer-Endgerätvorrichtung und eines Kanalrichtungsvektors einer auszuwählenden mobilen Regel-Endgerätvorrichtung zu berechnen und eine mobile Regel-Endgerätvorrichtung, die es ermöglicht, dass der Sehnenabstand das Maximum ist, auszuwählen, um die Planung auszuführen.

6. BS nach Anspruch 4 oder 5, die ferner Folgendes umfasst:

eine Leistungszuteilungseinheit (106), die konfiguriert ist, eine Leistungszuteilung in Übereinstimmung mit den Gewichten der mobilen Steuer-Endgerätvorrichtung und der mobilen Regel-Endgerätvorrichtung auszuführen, wobei ein Ergebnis der Leistungszuteilung für die Sendeeinheit verwendet wird, um die Daten in Übereinstimmung mit der Leistungszuteilung zu senden.

7. Mobile Steuer-Endgerätvorrichtung, die Folgendes umfasst:

eine Kanalinformationserhalteeinheit (111), die konfiguriert ist, Kanalzustandsinformationen, CSI, der mobilen Steuer-Endgerätvorrichtung zu erhalten; eine Filtereinheit (112), die konfiguriert ist, die CSI eines Sichtlinien-Signals, LOS-Signals, der mobilen Steuer-Endgerätvorrichtung durch das Eliminieren der CSI eines Mehrwegsignals in den CSI der mobilen Steuer-Endgerätvorrichtung zu erhalten; eine Sendeeinheit (113), die konfiguriert ist, die CSI des LOS-Signals der mobilen Steuer-Endgerätvorrichtung an eine Basisstation, BS, zu senden, wobei die CSI des LOS-Signals der mobilen Steuer-Endgerätvorrichtung für die BS verwendet werden, um eine Kommunikationslösung zu bestimmen; und eine Empfangseinheit (114), die konfiguriert ist, die durch die BS gesendeten Kommunikationsdaten zu empfangen.

8. Mobile Endgerätvorrichtung nach Anspruch 7, wobei die Filtereinheit (112) das Mehrwegsignal basierend auf einem Algorithmus eines gleitenden Fensters herausfiltert, um die durchschnittlichen CSI des LOS-Anteils in den CSI der mobilen Steuer-Endgerätvorrichtung zu erhalten, und die Größe des gleitenden Fensters durch eine Kanalschwundrate bestimmt ist.

9. Kommunikationsverfahren, das ferner Folgendes umfasst:

Erhalten durch eine mobile Steuer-Endgerätvorrichtung von Kanalzustandsinformationen, CSI, eines Sichtlinien-Signals, LOS-Signals, der mobilen Steuer-Endgerätvorrichtung durch das Eliminieren der CSI eines Mehrwegsignals in den CSI der mobilen Steuer-Endgerätvorrichtung; Senden durch die mobile Steuer-Endgerätvorrichtung der CSI des LOS-Signals der mobilen Steuer-Endgerätvorrichtung an eine Basisstation, BS, wobei die CSI des LOS-Signals der mobilen Steuer-Endgerätvorrichtung für die BS verwendet werden, um eine Kommunikationslösung zu bestimmen; und Empfangen der durch die BS gesendeten Kommunikationsdaten durch die mobile Steuer-Endgerätvorrichtung.

10. Verfahren nach Anspruch 9, wobei das Erhalten der CSI eines LOS-Signals der mobilen Steuer-Endgerätvorrichtung durch das Eliminieren der CSI eines Mehrwegsignals in den CSI der mobilen Steuer-Endgerätvorrichtung Folgendes umfasst:

Herausfiltern des Mehrwegsignals basierend auf einem Algorithmus eines gleitenden Fensters und Erhalten der durchschnittlichen CSI eines LOS-Anteils in den CSI der mobilen Steuer-Endgerätvorrichtung.

**11.** Verfahren nach Anspruch 10, wobei die Größe des gleitenden Fensters durch eine Kanalschwundrate bestimmt ist.

**Revendications**

**1.** Procédé de communication, comprenant les étapes consistant à :

recevoir (11), par une station de base, des informations d'état de canal, CSI, d'un signal en visibilité directe, LOS, d'un dispositif terminal mobile en boucle ouverte, lesquelles CSI du signal LOS sont obtenues en éliminant des CSI d'un signal multitrajet dans les CSI du dispositif terminal mobile en boucle ouverte ;
obtenir (12), par la station de base, des CSI d'un dispositif terminal mobile en boucle fermée possédant un canal qui est orthogonal à un canal du dispositif terminal mobile en boucle ouverte ;
effectuer (13), par la station de base, un calcul de précodage à l'aide des CSI du signal LOS du dispositif terminal mobile en boucle ouverte et des CSI du dispositif terminal mobile en boucle fermée ; et
transmettre (14), par la station de base, au dispositif terminal mobile en boucle ouverte des données de communication à l'aide d'un résultat du calcul de précodage.

**2.** Procédé selon la revendication 1, dans lequel l'étape consistant à obtenir (12) des CSI d'un dispositif terminal mobile en boucle fermée possédant un canal qui est orthogonal à un canal du dispositif terminal mobile en boucle ouverte comprend l'étape consistant à :

calculer une distance à la corde d'un vecteur de direction de canal du dispositif terminal mobile en boucle ouverte et d'un vecteur de direction de canal du dispositif terminal mobile en boucle fermée à sélectionner, et sélectionner un dispositif terminal mobile en boucle fermée qui permet de maximiser la distance à la corde.

**3.** Procédé selon la revendication 1 ou 2, comprenant en outre, préalablement à l'étape consistant à transmettre (14) au dispositif terminal mobile en boucle ouverte des données de communication après l'étape consistant à effectuer un calcul de précodage, l'étape consistant à :

effectuer une attribution de puissance en fonction de facteurs de pondération du dispositif terminal mobile en boucle ouverte et du dispositif terminal mobile en boucle fermée possédant un canal qui est orthogonal à un canal du dispositif terminal mobile en boucle ouverte, et transmettre les données en fonction d'un résultat de l'attribution de puissance.

**4.** Station de base, BS, comprenant :

une unité de réception d'informations de canal (101), conçue pour recevoir des informations d'état de canal, CSI, d'un signal en visibilité directe, LOS, d'un dispositif terminal mobile en boucle ouverte qui sont obtenues en éliminant des CSI d'un signal multitrajet dans les CSI du dispositif terminal mobile en boucle ouverte ;
une unité d'obtention d'informations de canal en boucle fermée (102), conçue pour obtenir des CSI d'un dispositif terminal mobile en boucle fermée possédant un canal qui est orthogonal à un canal du dispositif terminal mobile en boucle ouverte ;
une unité de précodage (103), conçue pour effectuer un calcul de précodage à l'aide des CSI transmises par le dispositif terminal mobile en boucle ouverte et des CSI du dispositif terminal mobile en boucle fermée ; et
une unité de transmission (107), conçue pour transmettre au dispositif terminal mobile en boucle ouverte des données de communication à l'aide d'un résultat du calcul de précodage.

**5.** Station de base selon la revendication 4, dans laquelle l'unité d'obtention d'informations de canal en boucle fermée (102) comprend :

un module de sélection de dispositif terminal mobile en boucle fermée, conçu pour calculer une distance à la corde d'un vecteur de direction de canal du dispositif terminal mobile en boucle ouverte et d'un vecteur de direction de canal d'un dispositif terminal mobile en boucle fermée à sélectionner, et sélectionner un dispositif terminal mobile en boucle fermée qui permet de maximiser la distance à la corde pour procéder à un ordonnancement.

6. Station de base selon la revendication 4 ou 5, comprenant en outre :

une unité d'attribution de puissance (106), conçue pour effectuer une attribution de puissance en fonction de facteurs de pondération du dispositif terminal mobile en boucle ouverte et du dispositif terminal mobile en boucle fermée, un résultat de l'attribution de puissance étant utilisé par l'unité de transmission pour transmettre les données en fonction de l'attribution de puissance.

7. Dispositif terminal mobile en boucle ouverte, comprenant :

une unité d'obtention d'informations de canal (111), conçue pour obtenir des informations d'état de canal, CSI, du dispositif terminal mobile en boucle ouverte ;
une unité de filtrage (112), conçue pour obtenir des CSI d'un signal en visibilité directe, LOS, du dispositif terminal mobile en boucle ouverte en éliminant des CSI d'un signal multitrajet dans les CSI du dispositif terminal mobile en boucle ouverte ;
une unité de transmission (113), conçue pour transmettre les CSI du signal LOS du dispositif terminal mobile en boucle ouverte à une station de base, BS, lesquelles CSI du signal LOS du dispositif terminal mobile en boucle ouverte sont utilisées par la BS pour établir une solution de communication ; et
une unité de réception (114), conçue pour recevoir des données de communication transmises par la BS.

8. Dispositif terminal mobile selon la revendication 7, dans lequel l'unité de filtrage (112) élimine par filtrage le signal multitrajet sur la base d'un algorithme d'une fenêtre glissante pour obtenir des CSI moyennes de la partie LOS dans les CSI du dispositif terminal mobile en boucle ouverte, et la dimension de la fenêtre glissante est établie par une cadence d'évanouissement de canal.

9. Procédé de communication, comprenant les étapes consistant à :

obtenir, par un dispositif terminal mobile en boucle ouverte, des informations d'état de canal, CSI, d'un signal en visibilité directe, LOS, du dispositif terminal mobile en boucle ouverte en éliminant des CSI d'un signal multitrajet dans les CSI du dispositif terminal mobile en boucle ouverte ;
transmettre, par le dispositif terminal mobile en boucle ouverte, les CSI du signal LOS du dispositif terminal mobile en boucle ouverte à une station de base, BS, lesquelles CSI du signal LOS du dispositif terminal mobile en boucle ouverte sont utilisées par la BS pour établir une solution de communication ; et
recevoir, par le dispositif terminal mobile en boucle ouverte, des données de communication transmises par la BS.

10. Procédé selon la revendication 9, dans lequel l'étape consistant à obtenir des CSI d'un signal LOS du dispositif terminal mobile en boucle ouverte en éliminant des CSI d'un signal multitrajet dans les CSI du dispositif terminal mobile en boucle ouverte comprend l'étape consistant à :

éliminer par filtrage le signal multitrajet sur la base d'un algorithme d'une fenêtre glissante, et obtenir des CSI moyennes d'une partie LOS dans les CSI du dispositif terminal mobile en boucle ouverte.

11. Procédé selon la revendication 10, dans lequel la dimension de la fenêtre glissante est établie par une cadence d'évanouissement de canal.

Receive CSI sent by a user, in which the CSI is CSI of an LOS signal of the user obtained by eliminating CSI of a multi-path signal ⟶ 11

Obtain CSI of a closed-loop user having a channel that is orthogonal to the channel of the user ⟶ 12

Perform pre-coding calculation by using the CSI of the LOS signal of the user and the CSI of the closed-loop user ⟶ 13

Send communication data to the user by using a result of the pre-coding calculation ⟶ 14

FIG. 1

FIG. 2

| Condition | Serving BS | Working Mode |
|---|---|---|
| $K_{m,1} \geq \kappa_m, K_{m,2} \geq \kappa_m, K_{m,3} \geq \kappa_m$ | BS 1, BS 2, BS 3 | Mixed SDMA |
| $K_{m,1} \geq \kappa_m, K_{m,2} \geq \kappa_m, K_{m,3} < \kappa_m$ | BS 1, BS 2 | Mixed SDMA |
| $K_{m,1} \geq \kappa_m, K_{m,2} < \kappa_m, K_{m,3} < \kappa_m$ | BS 1 | Mixed SDMA |
| $K_{m,1} < \kappa_m, K_{m,2} < \kappa_m, K_{m,3} < \kappa_m$ | Any combination of three BSs | Open-loop SDMA |
| ... | ... | ... |

FIG. 3

FIG. 4

FIG. 5

Transmission power is 43 dB, and 10 closed-loop users
to be selected are provided for scheduling

Distance (kilometer) between a BS1 and an
open-loop user 3

FIG. 6

Obtain CSI of a user ⟋71

Obtain CSI of an LOS signal of the user by eliminating CSI ⟋72
of a multi-path signal in CSI

Send the CSI of the LOS signal of the user to the BS, in
which the CSI of the LOS signal of the user is used for the ⟋73
BS to determine a collaborative communication solution

Receive communication data sent by the BS ⟋74

FIG. 7

81
82

Mobile terminal
device

BS

FIG. 8

Long
period
of time

BS 1

Module 3: Mode
switching module
based on a K factor

Module 1: Open-loop
user channel estimating
module based on a
sliding window

BS
controller

BS 2

Module 4: Closed-
loop user
scheduling module
based on channel
orthogonality

Downlink
data

...

...

BS n

Module 5: Open-
loop and closed-
loop users pre-
coding module

Module 2: Instant CSI
feedback module of the
closed-loop user

Module 6: Power
allocating module

FIG. 9

Channel information receiving unit 101

Mode determining unit 105

Closed-loop channel information obtaining unit 102

Pre-coding unit 103

Power allocating unit 106

Sending unit 107

FIG. 10

Channel information obtaining unit 111

Filtering unit 112

Sending unit 113

Receiving unit 114

FIG. 11

**EP 2 418 782 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009082179 A2